# EUROPEAN PATENT SPECIFICATION

(11) **EP 2 923 352 B1**
(45) Date of publication and mention of the grant of the patent: **15.03.2017**
(21) Application number: 13792946.9
(22) Date of filing: 12.11.2013
(51) Int. Cl.: G09F 9/30, G09F 15/00, G03B 21/58

(54) **FRAME SYSTEM FOR FLEXIBLE PANEL**
RAHMENSYSTEM FÜR FLEXIBLE PLATTE
SYSTÈME DE CHÂSSIS POUR PANNEAU SOUPLE

(30) Priority: 23.11.2012 GB 201221099
(43) Date of publication of application: 30.09.2015
(73) Proprietor: Averly IP Limited, London, Greater London SE2 0JT (GB)
(72) Inventor: HOWES, Adrian, London Greater London SE2 0JT (GB)
(74) Representative: Copsey, Timothy Graham
(86) International application number: PCT/GB2013/052974
(87) International publication number: WO 2014/080176

(56) References cited:
- EP-A1- 2 355 631
- WO-A1-2007/073741
- JP-A- H11 109 880

## Description

This invention relates to a frame system for supporting flexible panels or displays.

With the increasing diversity of flexible panels and display systems there is a need for a mechanism that allows systems to have the advantage of both being flexible, to enable such panels or displays to be bent, twisted or rolled up, and yet to also have the necessary rigidity, when required, to make them sturdy and functionally useful for certain applications. Previous efforts have focused on rigid frame systems for supporting rigid screens such as liquid crystal displays or on flexible panels not requiring a rigid support across the whole frame. The focus of these prior art systems has typically been on minimising the amount of support required for a typical display or panel thereby enabling lighter and/or thinner display systems.

An object of the present invention is to provide a mechanism which may be used to support any type of flexible panel, screen or display, whether formed from a sheet of some flexible material, such as a plastic (e.g. PVC or polyester) or natural material (e.g. cotton or ticking), or a flexible electronic system such as an organic LED display and/or a touch interface (e.g. a keyboard or touchpad).

The mechanism may therefore be used, for example, on any type of flexible display system whether a simple passive display (e.g. for projecting images onto a blank screen or displaying printed material) or an active display (e.g. utilising an organic LED system comprising suitable flexible substrates). Equally, the mechanism may be used as a purely mechanical device where both flexibility and rigidity may be required in one particular dimension to support a two dimensional surface, for example, perpendicular to the surface.

According to the invention there is provided a flexible panel comprising at least one rigid support and at least one supporting member formed from a memory material, the memory material being flexible in a first configuration and rigid in a second configuration.

On the contrary, prior art documents WO 2007/073741, JP H11 109880 and EP 2 355 631 disclose a flexible panel comprising at least one rigid or semi-rigid support and at least one supporting member formed from a memory material, the memory material being flexible in a first configuration and rigid in a second configuration and having a substantially flat cross-section in the second, rigid configuration and a substantially curved, bent or circular cross-section in the first, flexible configuration.

In a first, flexible configuration, the memory material may have a flat cross-section, whilst in the second, rigid configuration the memory material may have a bent, curved or circular cross-section. The memory material provides a collapsible, adaptable support to the flexible panel. The memory material may be arranged to bend, curve or expand independently of the flexible panel. It may also form part of the flexible panel.

The supporting member may be positioned at an angle to the at least one rigid support. The supporting member may be positioned at an angle substantially perpendicular to the at least one rigid support, or alternatively at an angle of between 30-60° to the at least one rigid support.

The flexible panel may comprise at least two adaptable supporting members formed from a memory material. The flexible panel may also comprise at least two rigid supports. At least one edge of one of the supporting members or the rigid supports may be attached at or near to the edge of the flexible panel. The rigid support may also form part of the flexible panel.

The memory material can change configuration from a second, rigid configuration to a first, flexible configuration. The flexible panel may include a mechanism arranged to exert a force upon the memory material in order to change the configuration of the memory material. Alternatively, or additionally, the flexible panel may comprise a
mechanism for applying heat, or of applying an electrical pulse to the memory material in order to change the configuration of the memory material.

The supporting members formed from a memory material may include at least one cut-away portion.

The flexible panel may be arranged to pass over a roller or a guiding means, or a first end of the flexible panel or the supporting members may be fixed to a roller.

The flexible panel may be secured within a housing, and the housing may further comprise an opening through which the flexible panel can pass.

The housing may comprise at least one internal indentation or slot. A first end of the flexible panel may be arranged to move within the confines of the internal indentation or slot. The central portion of the panel may be also arranged to pass over a roller or guiding means. Alternatively, a first end of the panel may be mounted to a fixed point within the housing, where the central portion of the panel is arranged to pass over a roller or guiding means, and the roller or guiding means may be arranged to move within the confines of the internal indentation or slot.

Typical dimensions of the flexible panel will vary depending on the application. Typical flexible panels for domestic electronic display purposes have varied aspect ratios, affecting the horizontal and vertical measurements of the screen/panel size. Commonly, screen size is defined by the diagonal measurement, combined with a measure of the aspect ratio. The flexible panels of the present invention may have a diagonal screen size of between approximately 3inches (8cm) up to approximately 80inches (approximately 2m) for domestic applications. The flexible panel may also be used outside the domestic environment for applications such as for advertising display screens, concert screens, presentation screens, the screening of public broadcasts, etc., where the size of the flexible panel is greater than 80inches (2m) and preferably greater than 120inches (approximately 3m).

The adaptable supporting member may adopt both a flexible and rigid (or semi-rigid) configuration by changing its form between at least two configurations. The first configuration may have a flat or substantially flat cross-section. The second configuration may be an alternative arrangement providing greater rigidity to the supporting member than the first configuration by adopting a substantially three-dimensional structure. The second configuration may be circular or substantially circular, curved, U-shaped, a rolled-over circular, V-shaped, S-shaped, arced, bent, curled, spiralled or any configuration that lends support and rigidity to the member. The first configuration is more flexible across one dimension than the second configuration. The second configuration has more material supporting it parallel to that dimension than the first configuration, which provides greater rigidity.

Each adaptable supporting member may be made of any suitable material which resists plastic deformation and favours the second configuration while also being capable of adopting the first configuration when forced by some mechanical means. Alternatively, or additionally, the material may transition from the first to the second configuration, or vice versa, on the application of heat or an electrical pulse to the material. Examples of suitable memory materials include, for example, a shape memory alloy (e.g. titanium based alloys such as Flexon^{®} or nitinol) or a suitable elastic or shape memory based polymer (e.g. polyurethane). The choice of material and the size of the members will depend on the size, weight, desired rigidity and purpose of the flexible panel. Each member may be fixed to the flexible panel by providing the member with a flat surface along one edge which may be glued or fixed to the panel by other means known to the skilled person. The member may also form part of the flexible panel. When the supporting member assumes the second configuration, the substantially curved, bent or circular cross-section of the supporting member is substantially perpendicular to the flexible panel. Whilst the flexible panel may unravel or slide in a first direction, the supporting member curls or expands in a second direction. The use of a flexible supporting member allows the flexible panel to be stored in a compact state. When the supporting member is activated into the second configuration, it provides support to the panel and ensures that the surface of the panel is substantially flat.

As an alternative to the use of two supporting members and the flexible panel may be supported by a single adaptable supporting member formed from a memory material. The single adaptable supporting member may be positioned diagonally on one surface of the flexible panel (not illustrated), with the panel held taut by at least one further rigid support (and optionally a second rigid support). In this arrangement, the supporting member may form an angle of approximately 30-60° to at least one rigid support positioned at the end of the flexible panel. When the adaptable supporting member is in a first, flexible configuration the panel remains flexible. When the adaptable supporting member is in a second, rigid configuration the panel is kept flat or substantially flat by the adaptable supporting member in combination with at least one rigid support. When the memory material adopts a second configuration, the curved, bent or expanded cross-section extends in a direction away from the surface of the flexible panel.

Preferred/optional features relating to one embodiment may apply equally to separate embodiments.

Examples of the present invention will now be described, by way of example only, with reference to the accompanying diagrammatic drawings, in which:
Figure 1 shows schematically an isometric view of a flexible panel on a roller, with a portion of the panel extended;
Figure 2a and 2e shows schematically a cross-sectional view representing a possible arrangement for the first configuration formed by the supporting member(s);
Figures 2b to 2d and 2f show schematically a plurality of cross-sectional views representing possible arrangements for the second configuration formed by the supporting member(s);
Figures 3a to 3d are schematic cross-sectional views illustrating the use of a flexible panel mounted on a roller, where the supporting members are in a first configuration within a housing and a second configuration outside of the housing;
Figure 4 shows schematically a cross-sectional view of a support system, where two flexible panels are used and there is more than one roller;
Figures 5a to 5c are schematic isometric views of the flexible panel illustrating the presence of a cut-away portion in a supporting member;
Figure 6 shows schematically a cross-sectional view of a wedge shaped portion in contact with the supporting member of the flexible panel, as identified by the dotted lines A in Figure 3c;
Figure 7 shows schematically a cross-sectional view of a housing, where the flexible panel is mounted on a sliding mechanism and a wedge-shaped portion contacts the supporting members as they enter the housing;
Figure 8a shows schematically a cross-sectional view of an example of a sliding arrangement; where one end of the flexible panel is free to move within a slot or indentation present in the housing.
Figure 8b shows schematically a cross-sectional view of a further example of a sliding arrangement; where one end of the flexible panel is fixed to the wall of the housing.

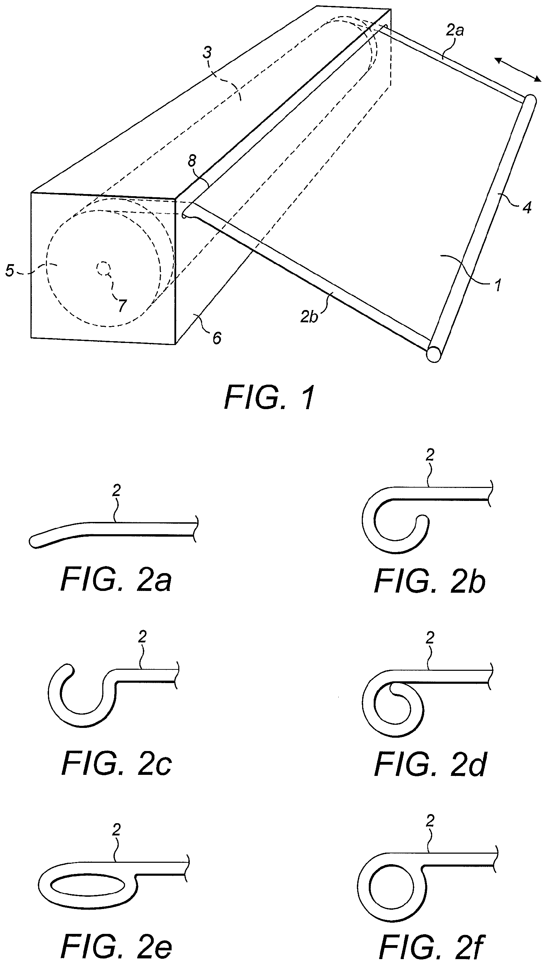

Figures 1 and 2a to 2f illustrate generic features of examples of this invention. In Figure 1, the flexible panel **1** is shown with two adaptable supporting members **2a** and **2b** positioned parallel (or substantially parallel) to each other. Supports **3** and **4** may be rigid or semi-rigid, for example semi-rigid poles, and each support can be positioned at either end of the panel **1.** For ease of reference these supports are referred to hereafter as rigid supports. Supporting members **2a** and **2b** are formed from a memory material and can adopt either a flexible, rigid or semi-rigid configuration. In Figure 1, both supporting members **2a** and **2b** are shown attached to the panel **1** and to the rigid supports (**3** and **4**) positioned perpendicular (or substantially perpendicular) to **2a** and **2b,** but opposite each other, thereby forming a frame around a flexible panel **1,** which may be in the form of a square/rectangle. The rigid supports **3** and **4** can be designed to be rigid enough to provide support and tension across one dimension of the panel **1** substantially perpendicular to supporting members **2a** and **2b** to keep the panel flat, or substantially flat, when members **2a** and **2b** are in a rigid configuration. At least two of members **2a, 2b, 3** and **4** have at least one edge attached to one side of the flexible display panel **1;** preferably at least **2a** and **2b;** more preferably all four members have at least one edge attached to one side of the display panel. Rigid support **3** may be in the form of a roller **5.**

The adaptable supporting member(s) **2** may adopt both a flexible and rigid configuration by changing their form between at least two configurations. The first configuration may have a flat or substantially flat cross-section, as illustrated by Figures 2a and 2e, for example. Examples of alternative means of achieving the second configuration are illustrated by Figures 2b-2d and 2f. For example, the second configuration may have a substantially curved cross-section (see Figure 2b) or a U-shaped cross-section (see Figure 2c) or a rolled over circular cross-section (see Figure 2d) if formed from Figure 2a or a circular (see Figure 2f) or substantially circular, oval, elliptical, semi-circular or substantially semi-circular cross-section if formed from Figure 2e. A particular advantage of a closed loop, equivalent to Figures 2e and 2f, is that a single supporting member (or a series of parallel supporting members) may be used more easily and economically (or in greater numbers) across the breadth of, or part of the breadth of, the back surface of the flat panel 1 than an open loop, equivalent to Figures 2a to 2d, thereby reducing the total area of the flat panel **1.**

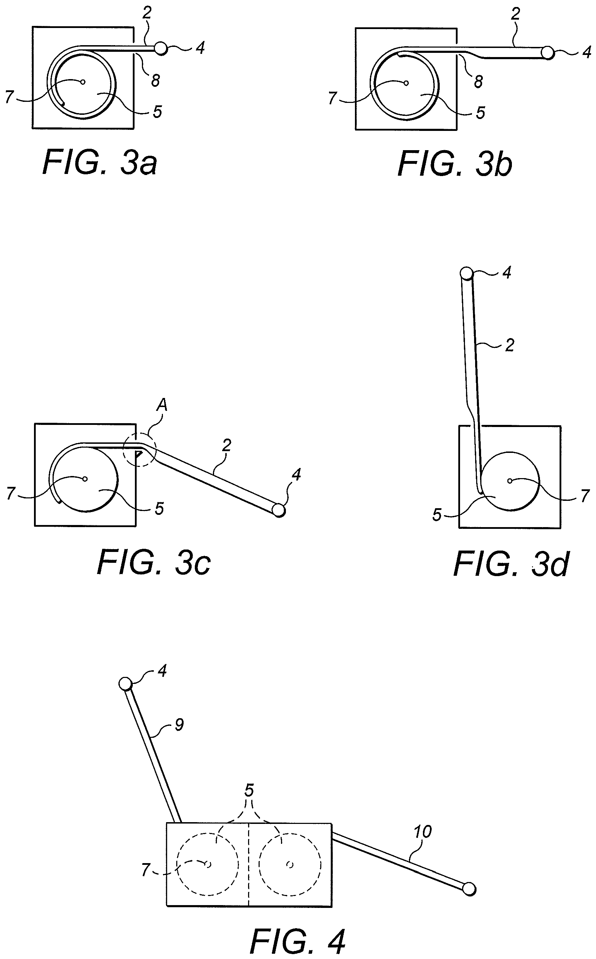

Figures 3a to 8b describe a number of exemplary arrangements according to this invention, using two adaptable supporting members **2a** and **2b.**

The use of members **2a** and **2b** allows for a flexible panel **1** to be rolled up in a space saving manner. In a first example, as illustrated by Figures 3a to 3d, support **3** is a roller **5** onto which one end of both members **2a** and **2b** are fixed and one edge of the flexible panel **1** may also be fixed. One edge of members **2a** and **2b** may each be fixed to one edge of the panel. Alternatively, the members **2a** and **2b** may be fixed to the back or front of the flat panel **1,** near its edge.

The purpose of the roller **5** is to provide a support for the panel **1** both when rolled onto the roller and when unrolled. The roller may be made of any suitably rigid metal, plastic or equivalent material. Surrounding the roller may additionally be a support system or housing **6** in which the roller **5** may be attached or mounted to allow it to freely rotate around an axle **7.** The housing has an opening **8** to allow the panel to be extended through. The opening **8** is wider than the depth of the panel. The roller **5** may also have tapered ends (not illustrated) where the first configuration of supporting members **2a** and **2b** is slightly arced or curved. Providing the roller with tapered ends allows for compact storage by compensating for the additional volume of the supporting members **2a** and **2b,** where they are not flat in the first configuration.

Rigid support **4** may be attached to the opposite ends of members **2a** and **2b** to that of rigid support **3** or roller **5.** Support **4** may be also attached to one edge of the panel **1**. Alternatively, support 4 may be attached to the front or back of the flat panel or form part of it. Support **4** may be also another roller, similar to roller **5,** supported by its own housing **6.** Together with support **3,** support **4** ensures that the flexible panel is kept taut. Equally, no support **4** may be used, if the application does not require it.

The roller **5** and housing **6** may also contain a spring mechanism, known to those skilled in the art, to assist in the rolling up of the panel **1** during retraction. It may also contain a locking mechanism preventing automatic retraction due to the spring load. The locking mechanism may be arranged such that it allows the retraction of the flexible panel **1** when the panel has been over-extended. This can either be achieved as described in the third example below, or by using a known system of preventing retraction, such as a ratchet mechanism, unless the panel **1** is pulled in a certain direction or with a particular force causing the mechanism to unlock the roller **5** thereby allowing it to turn and retract the panel by rolling up the panel. Alternatively, an electric motor, or equivalent, may be used to assist in retraction. The housing 6 may be made of metal, plastic or equivalent material. The housing may be configured in the form of a box, for example.

The roller **5** and/or housing **6** may also contain a heating element or an electrical charge/pulse generator to assist in or cause the transition of supporting members **2** from a first to a second configuration, or vice versa. The method used will depend on the memory material used.

More than one roller may be used to provide additional panels (see Figure 4). In this second example, two rollers **5** may be used; one supporting a visual display panel **9** and the other a touchpad **10 in** the form of a keyboard.

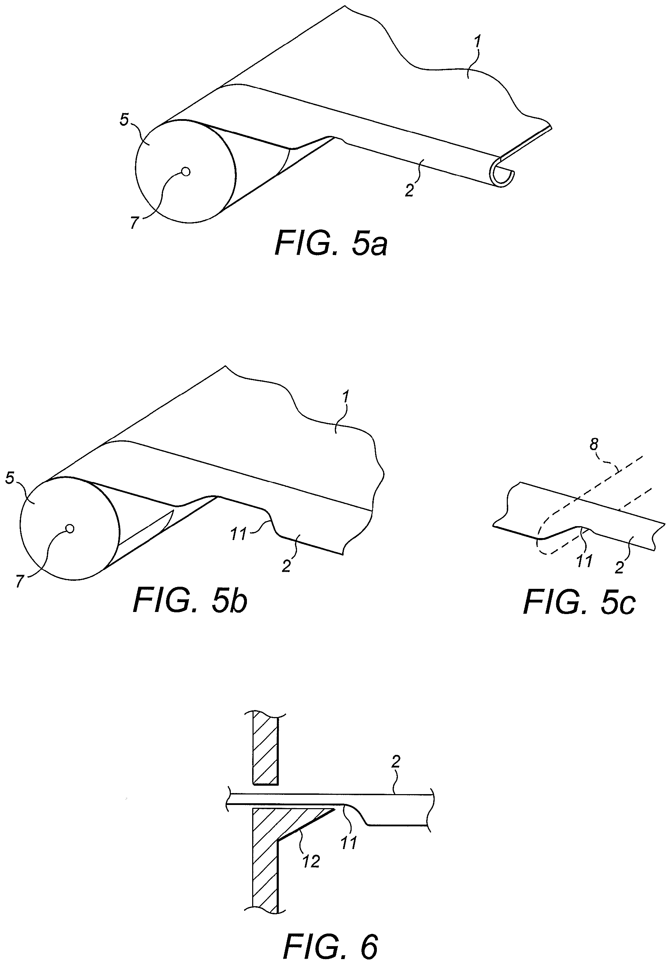

Figure 5a illustrates the extension of the flexible panel **1** from a roller **5,** according to any of the preceding examples. Whilst the flexible panel is extended in a first direction, the supporting member **2** makes the transition from a first configuration to a second configuration. The bend in supporting member **2** occurs in a second direction, substantially perpendicular to the first direction. To assist with the transition between the first and second configurations of supporting members **2,** the ends of **2a** and **2b** may be attached to support **4** in their second configuration. This may be achieved through the use of slots in support **4,** for example, or any alternative fixing means.

In a third example of this invention, supporting members **2a** and **2b** may have a slit, notch or cut-away portion **11** (see Figure 5b, for example), positioned at a distance along each supporting member **2** such that it will be exposed outside the housing **6** when the flexible panel has been extended from the opening **8** as shown in Figure 5c. In place of the cut-away portion **11,** the same effect can be achieved by the use of a slit, a cut, a notch, an indentation or equivalent. The cut-away portion **11** may be any shape or size that does not impede the section of the supporting member **2** exposed outside the opening **8** of the housing **6** adopting a second configuration across its exposed length but which still allows enough material for the member **2** to be attached to and support the edge of the flexible panel.

This third example may also have an opening **8** which is narrower than the depth of the supporting member **2** in its second configuration. The advantage of having a narrow opening **8** is that it may be used to assist in the unfurling of member **2** from the second configuration to the first configuration during retraction (see Figure 5c).

However, the narrow opening could prevent supporting member **2** from adopting the second configuration across its full length outside the housing **6.** The use of a cut-away portion **11** allows this second configuration to be fully adopted along the full length of supporting member **2.** A further advantage of the cut-away portion **11** is that retraction can be prevented by this mechanism. This allows the cut-away portion **11** to act as a lock to prevent retraction, if desired, for example, if the roller **5** is spring assisted. It may also act as a support, for example, keeping a display panel upright or a touchpad at a particular angle, depending on the shape of the cut-away portion **11.**

The cut-away portion prevents the retraction of the flexible panel due to supporting member **2** being in the second configuration, which renders it too thick to fit through the opening **8.** This may, however, be overcome by using an unlocking mechanism **12.** Figure 6, illustrates an example of an unlocking mechanism **12,** according to a third example of the invention. The unlocking mechanism **12** may be attached to, or form part of, the housing **6.** The unlocking mechanism **12** may be any shape that assists in the unfurling of member **2.** The unlocking mechanism **12** may be formed from a wedge or pointer, or any alternative mechanism configured to unfurl the supporting member **2** from the second configuration to the first configuration. A wedge may be used for each supporting member **2,** the wedge being positioned either above, below or to the side of opening **8,** as appropriate depending on the configuration of the second configuration, but adjacent to supporting member **2.** For example, the wedge might be triangular in shape or a shape consisting of a point at its end but conforming to the unfurling shape of supporting member **2** across its length, at any point in time, during retraction. The unlocking mechanism **12** should be positioned to interact within the enclosed open space of the second configuration cross-section of supporting member **2** during retraction. When force is then applied in the direction of the roller **5** to retract the panel the unlocking mechanism **12** forces the supporting member **2** to unfurl as the member retracts into the housing **6.** The unlocking mechanism **12** ensures, through its shape, that the cross-section of supporting member **2** approaches that of the first configuration shortly before reaching the opening **8.**

This unlocking mechanism **12** thereby enables supporting member **2** to both fully adopt the rigid second configuration, following exposure of the cut-away portion **11** from opening **8,** whilst still allowing the second configuration to be returned to the flexible first configuration, as the flexible panel **1** is retracted. The combination of these features enables the conversion of the adaptable supporting member **2** between the first and second configuration, i.e. between flexible and rigid configurations, at suitable positions. The flexible panel is supported when extended, whilst full retraction (or rolling up) of the flexible panel is also ensured.

The unlocking mechanism **12** detailed above describes a device capable of applying a force to the memory material to cause or induce a change from one configuration to another. It is also possible to convert or to assist the conversion of the memory material from one configuration to another using alternative, or additional, methods. For example, heat or an electrical pulse can be applied, either when applying a force on the flexible panel **1** in the direction of retraction through the opening **8** or by activating an electrical switch or its equivalent. The method used will depend on the memory material selected and/or the application.

A further example of this invention uses the unlocking mechanism, described above, to allow a flexible panel to adopt either a flexible or rigid configuration without the use of a roller.

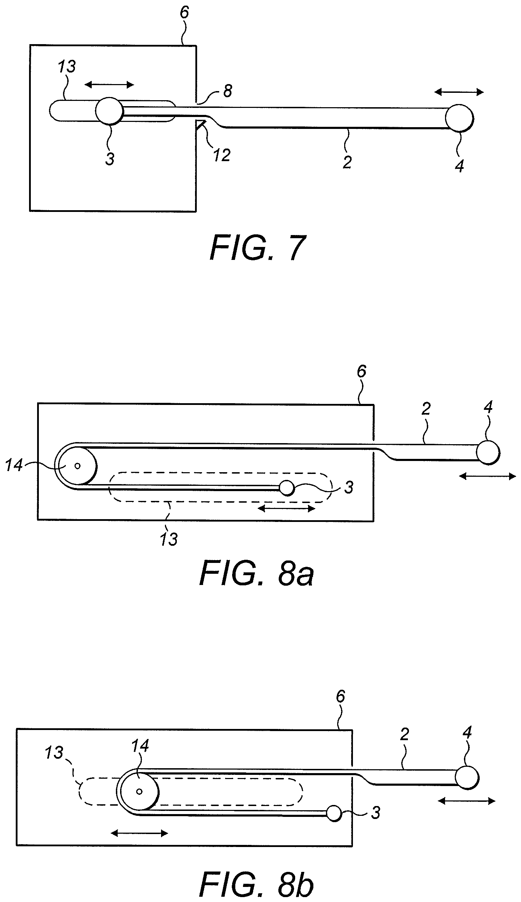

In this fourth example, illustrated in Figure 7, the supports **3** and **4** are rigid (or semi-rigid) structures made of plastic, metal or an equivalent material onto which are attached the ends of members **2a** and **2b** and optionally one edge of the flexible panel, in a similar manner to that described in the first example. Alternatively, any or all of members **2a** and **2b** and supports **3** and **4** may also form part of the flexible panel **1.** At least one of the supports **3** and **4** is also surrounded by a housing **6** containing an opening **8** and unlocking mechanism **12** for each member **2a** and **2b** as described in the third example. In this example the housing does not contain a roller as in the first and second examples. To assist in the effectiveness of the unlocking mechanism **12** in unfurling supporting members **2** a sliding mechanism as shown in Figure **7** may be used in the housing **6.** The sliding mechanism allows, for example, support **3** to slide either backwards or forwards within the housing **6** in a constrained manner.

The sliding mechanism may simply consist of linear indentations **13** at opposite sides of the housing **6** into which the two opposite ends of support **3** may fit and slide freely in one dimension allowing movement both forwards and backwards. The sliding mechanism may also contain a spring mechanism favouring a backwards/retracted position to assist in unfurling members **2a** and **2b.** There may be a series of linear indentations (for example, in a "zig-zag" pattern) within the housing and the flexible panel **1** may be able to slide into a folded or bent position in order to maximise the use of space within the housing 6.

In this fourth example, supporting members **2a** and **2b** have a cut-away portion **11** at one end (or both ends if both supports **3** and **4** have a housing **6** with unlocking mechanism **12**), in a similar manner as in the third example, which when the support **3** is slid forward is exposed outside the housing but when slid backwards is located in the housing. Upon sliding the panel **1** back into the housing, using force, the unlocking mechanism **12** initially causes a part of members **2a** and **2b** to unfurl. Using the appropriate material, depending on the size and purpose of the panel, the material may unfurl across its whole length, as a consequence of the force of the initial unfurling, to adopt a first configuration from a second configuration. This first configuration then allows the panel to become flexible. Equally, when the cut-away portions **11** of members **2a** and **2b** are exposed, by force being applied to, for example support **4,** to pull panel **1** to a forward position, supporting members **2a** and **2b** adopt a second configuration returning the panel to a rigid configuration.

This mechanism therefore allows a panel to adopt either a rigid or flexible configuration simply by using a pulling or pushing motion, respectively.

To further assist in the unfurling of support members **2a** and **2b** both supports **3** and **4** may have a housing **6** using both the sliding mechanism and the unlocking mechanism described in this third example.

Equally, for certain situations where the material of members **2a** and **2b** allows unfurling across the lengths of members **2a** and **2b** without the assistance of unlocking mechanism **12** to force a change of configuration, it is possible to use no unlocking mechanism **12.** In these situations members **2a** and **2b** do not need to contain a cut-away portion **11.** In this example, the ends of members **2a** and **2b** should preferably be attached to supports **3** and/or **4,** contained in a housing **6,** in their first configuration.

Example 4 (above) describes a device capable of applying force to the memory material to cause or induce a change from one configuration to another. It is also possible to convert or to assist the conversion of the memory material from one configuration to another using alternative or additional methods including, for example, the application of heat or an electrical pulse.

A fifth example is illustrated in Figure 8a. In this example, the housing **6** may contain both a sliding mechanism described in the fourth example and a roller **14.** The roller can be fixed to opposite ends of the housing **6** on an axle allowing it to rotate and can be positioned parallel to support **3,** whilst the ends of support **3** are fitted into an indentation **13.** As an alternative, the roller can be fixed to prevent rotation, forming a guiding surface. A fixed guide or support can also be used as a substitute for a roller. The roller **14** or fixed guide's position in the housing **6** depends on the desired arrangement for the flexible panel, but should preferably be placed further back in the housing **6** than the effective use of indentation **13.** Supporting members **2a** and **2b,** and the flexible panel **1,** may then move over and around the roller **14** when pushed or pulled while support **3** may slide freely along the indentation **13** as shown in Figure 8a. Support **3** may also be attached to a spring to aid in retraction of the panel.

This example allows the use of a roller to assist in forcing supporting members **2a** and **2b** into adopting a first configuration and gives the advantage of space saving in the support system or housing, in one dimension, over the first or fourth example.

In a sixth example both the sliding mechanism and roller system described in the fifth example are used. In this example, however, support **3** is fixed to the housing, or is a part of housing **6** to which members **2a** and **2b** are attached (preferably in their first configuration), and the axle of roller **14** is fitted to move freely in the indentation **13** as shown in Figure 8b. The fixed position of support **3** depends on the system set up but should preferably be further forward in the supporting system or housing **6** than the effective use of indentation **13.** The roller **14** may be attached to a spring to assist in retraction of the panel.

This example has a further advantage over the fifth example, as it allows a greater proportion of the panel **1** to be exposed outside of the supporting system or housing **6.**

For both the fifth and sixth examples unlocking mechanisms **12** may or may not be used on the housing **6** and supporting members **2a** and **2b** may or may not need to contain a cut-away portion **11,** as in the first and fourth examples. For example, the unlocking mechanism **12** may not need to be used if the application of heat or an electric pulse is used to assist or cause the transition of members **2a** and **2b** from a first to a second configuration, or vice versa. Equally, the fifth and sixth examples may be used without the combination of supporting members **2a, 2b** and support **4.**

The skilled person will realise that some of the above examples may be used in combination. For example, the fourth example may also be used in combination with the first, second or third example. Support **3** may use the mechanism of either the first, second or third example and support **4** may use the simpler mechanism of the fourth example.

The skilled person will also realise that the housing **6** may enclose other systems, such as electronic or mechanical elements, associated with the panel and that any of the members, **2a, 2b** and any of the supports **3, 4** may be used to connect the panel to such systems where required.

The above examples and embodiments have been described by way of example only, and the described examples are to be considered in all respects only as illustrative and not restrictive. It will be appreciated that variations of the described examples may be made without departing from the scope of the invention.

## Claims

1. A flexible panel (1) comprising at least one rigid or semi-rigid support (3,4) and at least one supporting member (2) formed from a memory material, the memory material being flexible in a first configuration and rigid in a second configuration, **characterized in** having a substantially flat cross-section in the first configuration and a substantially curved, bent or circular cross-section in the second configuration.

2. A flexible panel according to Claim 1, where the supporting member is positioned substantially perpendicular to the at least one rigid support.

3. A flexible panel according to Claim 1, where the supporting member is positioned at an angle of between 30-60° to the at least one rigid support.

4. A flexible panel according to any preceding claim, comprising at least two supporting members formed from a memory material.

5. A flexible panel according to any preceding claim, where at least one of the supporting members or the rigid supports are attached at or near to the edge of the flexible panel.

6. A system for a flexible panel according to any preceding claim, comprising a mechanism (12) arranged to exert a force upon the memory material in order to change or assist in the change of the configuration of the memory material.

7. A system for a flexible panel according to any preceding claim, comprising a mechanism (12) for applying heat to the memory material in order to change or assist in the change of the configuration of the memory material.

8. A system for a flexible panel according to any preceding claim, comprising a mechanism (12) for applying an electrical pulse or current to the memory material in order to change or assist in the change of the configuration of the memory material.

9. A flexible panel according to any preceding claim, where the memory material includes at least one cut-away portion (11).

10. A flexible panel according to any preceding claim, where the panel is arranged to pass over a roller (5,14) or guiding means.

11. A system for a flexible panel according to any preceding claim, where a first end of the panel or its supporting member is fixed to a roller.

12. A system for a flexible panel according to any preceding claim, where the panel is secured within a housing (6).

13. A system for a flexible panel according to Claim 12, where the housing further comprises an opening (8) through which the panel can pass.

14. A system for a flexible panel according to any Claim 12 or Claim 13, where the housing comprises at least one internal indentation or slot (13), and where a first end of the panel is arranged to move within the confines of the internal indentation or slot.

15. A system for a flexible panel according to any of Claims 12 to 14, where part of the housing comprises a wedge adapted to cause or assist in the transition of the configuration of the memory material.

## Patentansprüche

1. Flexibles Paneel (1), das wenigstens eine starre oder halbstarre Stütze (3, 4) und wenigstens ein Stützelement (2) aus einem Formgedächtnismaterial aufweist, wobei das Formgedächtnismaterial in einer ersten Konfiguration flexibel und in einer zweiten Konfiguration starr ist,
**dadurch gekennzeichnet, dass**
es in der ersten Konfiguration einen im Wesentlichen flachen Querschnitt und in der zweiten Konfiguration einen im Wesentlichen gekrümmten, gebogenen oder kreisförmigen Querschnitt hat.

2. Flexibles Paneel nach Anspruch 1, wobei das Stützelement im Wesentlichen senkrecht zu der wenigstens einen starren Stütze angeordnet ist.

3. Flexibles Paneel nach Anspruch 1, wobei das Stützelement in einem Winkel zwischen 30° und 60° zu der wenigstens einen starren Stütze angeordnet ist.

4. Flexibles Paneel nach einem der vorhergehenden Ansprüche, die wenigstens zwei Stützelemente aufweist, welche aus einem Formgedächtnismaterial hergestellt sind.

5. Flexibles Paneel nach einem der vorhergehenden Ansprüche, wobei wenigstens eines der Stützelemente oder der starren Stützen an oder nahe dem Rand des flexiblen Paneels befestigt ist.

6. System für ein flexibles Paneel nach einem der vorhergehenden Ansprüche, das einen Mechanismus (12) aufweist, der dazu ausgelegt ist, eine Kraft auf das Formgedächtnismaterial auszuüben, um die Konfiguration des Formgedächtnismaterials zu ändern oder zur Änderung beizutragen.

7. System für ein flexibles Paneel nach einem der vorhergehenden Ansprüche, das einen Mechanismus (12) zum Aufbringen von Wärme auf das Formgedächtnismaterial aufweist, um die Konfiguration des Formgedächtnismaterials zu ändern oder zur Änderung beizutragen.

8. System für ein flexibles Paneel nach einem der vorhergehenden Ansprüche, das einen Mechanismus (12) zum Anlegen eines elektrischen Impulses oder Stroms an das Formgedächtnismaterial aufweist, um die Konfiguration des Formgedächtnismaterials zu ändern oder zur Änderung beizutragen.

9. Flexibles Paneel nach einem der vorhergehenden Ansprüche, wobei das Formgedächtnismaterial wenigstens einen weggeschnittenen Abschnitt (11) aufweist.

10. Flexibles Paneel nach einem der vorhergehenden Ansprüche, wobei das Paneel dazu angeordnet ist, über eine Walze (5, 14) oder Führungsmittel zu laufen.

11. System für ein flexibles Paneel nach einem der vorhergehenden Ansprüche, wobei ein erstes Ende des Paneels oder seines Stützelements an einer Walze befestigt ist.

12. System für ein flexibles Paneel nach einem der vorhergehenden Ansprüche, wobei das Paneel in einem Gehäuse (6) geschützt ist.

13. System für ein flexibles Paneel nach Anspruch 12, wobei das Gehäuse des Weiteren einen Öffnung (8) aufweist, durch welche das Paneel hindurchtreten kann.

14. System für ein flexibles Paneel nach einem der Ansprüche 12 oder 13, wobei das Gehäuse wenigstens eine/n innere/n Einbuchtung oder Schlitz (13) aufweist, und wobei ein erstes Ende des Paneels dazu ausgelegt ist, sich in den Begrenzungen der/des inneren Einbuchtung oder Schlitzes zu bewegen.

15. System für ein flexibles Paneel nach einem der Ansprüche 12 bis 14, wobei ein Teil des Gehäuses einen Keil aufweist, der dazu ausgelegt ist, den Übergang der Konfiguration des Gedächtnismaterials zu verursachen oder dazu beizutragen.

## Revendications

1. Panneau souple (1) comprenant au moins un support rigide ou semi-rigide (3, 4) et au moins un élément de support (2) formé à partir d'une matière à mémoire, la matière à mémoire étant souple dans une première configuration et rigide dans une seconde configuration, caractérisé en ayant une section transversale sensiblement plate dans la première configuration et une section transversale sensiblement courbe, pliée ou circulaire dans la seconde configuration.

2. Panneau souple selon la revendication 1, où l'élément de support est positionné sensiblement perpendiculairement à l'au moins un support rigide.

3. Panneau souple selon la revendication 1, où l'élément de support est positionné à un angle entre 30 et 60° par rapport à l'au moins un support rigide.

4. Panneau souple selon l'une quelconque des revendications précédentes, comprenant au moins deux éléments de support formés à partir d'une matière à mémoire.

5. Panneau souple selon l'une quelconque des revendications précédentes, où au moins un des éléments de support ou les supports rigides sont attachés à ou près du bord du panneau souple.

6. Système pour un panneau souple selon l'une quelconque des revendications précédentes, comprenant un mécanisme (12) agencé pour exercer une force sur la matière à mémoire afin de changer ou aider au changement de la configuration de la matière à mémoire.

7. Système pour un panneau souple selon l'une quelconque des revendications précédentes, comprenant un mécanisme (12) pour appliquer de la chaleur à la matière à mémoire afin de changer ou aider au changement de la configuration de la matière à mémoire.

8. Système pour un panneau souple selon l'une quelconque des revendications précédentes, comprenant un mécanisme (12) pour appliquer une impulsion ou un courant électrique à la matière à mémoire afin de changer ou aider au changement de la configuration de la matière à mémoire.

9. Panneau souple selon l'une quelconque des revendications précédentes, où la matière à mémoire inclut au moins une partie découpée (11).

10. Panneau souple selon l'une quelconque des revendications précédentes, où le panneau est agencé pour passer au-dessus d'un rouleau (5, 14) ou un moyen de guidage.

11. Système pour un panneau souple selon l'une quelconque des revendications précédentes, où une première extrémité du panneau ou de son élément de support est fixée à un rouleau.

12. Système pour un panneau souple selon l'une quelconque des revendications précédentes, où le panneau est fixé à un logement (6).

13. Système pour un panneau souple selon la revendication 12, où le logement comprend en outre une ouverture (8) à travers laquelle le panneau peut passer.

14. Système pour un panneau souple selon n'importe laquelle de la revendication 12 ou de la revendication 13, où le logement comprend au moins une encoche ou fente interne (13), et où une première extrémité du panneau est agencée pour se déplacer dans les limites de l'encoche ou fente interne.

15. Système pour un panneau souple selon l'une quelconque des revendications 12 à 14, où une partie du logement comprend une cale conçue pour amener ou aider à la transition de la configuration de la matière à mémoire.
